# EUROPÄISCHE PATENTSCHRIFT

(11) **EP 0 452 565 B1**
(45) Veröffentlichungstag und Bekanntmachung des Hinweises auf die Patenterteilung: **28.07.1993**
(21) Anmeldenummer: 90125810.3
(22) Anmeldetag: 29.12.1990
(51) Int. Cl.: B60R 16/02

(54) **Kraftfahrzeugkommunikationszentrale**
Vehicle communication control centre
Centrale de communication pour véhicule

(30) Priorität: 20.03.1990 DE 4008914
(43) Veröffentlichungstag der Anmeldung: 23.10.1991
(73) Patentinhaber: Blaupunkt-Werke GmbH, 31132 Hildesheim (DE)
(72) Erfinder: Attig, Joachim, W-3200 Hildesheim (DE); Kässer, Jürgen, Dr., W-3201 Diekholzen 2 (DE); Liman, Helmut, W-3201 Klein Escherde (DE); Scholz, Matthias, W-3200 Hildesheim (DE)
(74) Vertreter: Eilers, Norbert, Dipl.-Phys.

(56) Entgegenhaltungen:
- EP-A- 0 056 587
- US-A- 4 797 924
- US-A- 4 827 520
- PATENT ABSTRACTS OF JAPAN vol. 8, no. 220 (M-330)(1657) 06 Oktober 1984, & JP-A-59 102633 (TOYOTA) 13 Juni 1984,

## Beschreibung

Gegenstand des Schutzrechts ist eine neue Kraftfahrzeugkommunikationszentrale, an die z. B. Autoradios, Autotelefone, Autofunkgeräte, aber auch Geräte und andere im Kraftfahrzeuginnenraum akustisch wirksam werdende Geräte anschließbar sind.

Aus der US-PS 4 797 924 ist die Steuerung von Zusatzgeräten in Kraftfahrzeugen durch Sprachbefehle bekannt. Die Steuereinheiten dieser Geräte umfassen im Kraftfahrzeuginnenraum angeordnete Mikrofone und eine Sprachbefehlserkennungsschaltung. Hiermit läßt sich z. B. das Öffnen und Schließen der Fenster steuern.

Befinden sich in dem Kraftfahrzeug Autoradios, Taxifunksprechgeräte oder auch Gebläse, also Geräte, die im Innenraum akustisch wirksam werden, dann besteht die Gefahr, daß vom Fahrer gegebene Sprachbefehle von der Erkennungsschaltung nicht erkannt werden oder Gesprächsinhalte oder Sendungsinhalte als Befehle ausgewertet werden.

Um dieser Gefahr zu begegnen, sind in der bereits erwähnten US-PS 4 797 924 zwei Mikrofone im rechten Winkel zueinander angeordnet, von denen eines auf den Fahrer ausgerichtet ist. Die Ausgangssignale beider Mikrofone werden voneinander subtrahiert in der Annahme, daß dadurch die in beiden Mikrofonen gleich stark empfangenen Störgeräusche sich gegenseitig auslöschen und nur das von dem auf den Fahrer gerichtete Mikrofon abgegebene Signal nach der Subtraktion übrig bleibt.

Der Weiterentwicklung der bekannten Gerätesteuerungen lag die Aufgabe zugrunde, die Erkennung von Sprachbefehlen zu vereinfachen und zu verbilligen.

Diese Aufgabe wird durch die in dem Anspruch 1 genannten Merkmale gelöst.

Ferner besteht die Gefahr, daß die Eingabe eines mehrere Teilbefehle - z. B. die Ziffern einer Zahl - umfassenden Sprachbefehls bei einer kritischen Verkehrssituation abgebrochen wird und der ganze Befehl nach Normalisierung der Verkehrssituation wiederholt werden muß. Die Bedienung der Gerätesteuerung läßt sich erleichtern, wenn sie entsprechend den Unteransprüchen ausgebildet ist.

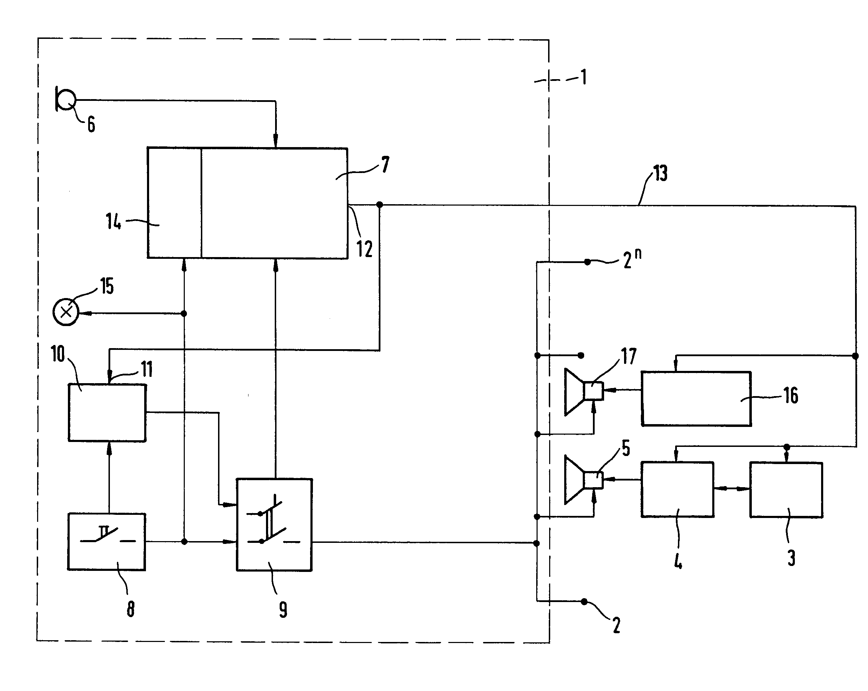

Anhand der Zeichnung wird ein Ausführungsbeispiel der Erfindung näher erläutert.

Die Kraftfahrzeugkommunikationszentrale 1 weist Anschlüsse 2 .... ..... 2ⁿ für Geräte auf, die im Kraftfahrzeuginnenraum akustisch wirksam werden; z. B. ein Autotelefon, das über einen Sender 3 mit einer Freisprecheinrichtung und einen Empfänger 4 mit einem Lautsprecher 5 verfügt. Die Zentrale 1 umfaßt ein Mikrofon 6 und eine Sprachbefehlserkennungsschaltung 7. Ferner gehört zur Zentrale 1 ein von Hand betätigbarer und im Kraftfahrzeug an einer leicht und bequem zugänglichen Stelle angeordnete Impulsschalter 8 und ein von diesem gesteuerter Koppelschalter 9. Bei der ersten Betätigung des Impulsschalters 8 wird über den Koppelschalter 9 die Sprachbefehlserkennungsschaltung 7 eingeschaltet und der Lautsprecher 5 des Autotelefons sowie die Schallwellen erzeugenden Teile der anderen Geräte ausgeschaltet.
Zugleich wird durch den Impulsschalter 8 ein Zeitglied 10 gestartet. Am Ende seiner Standzeit setzt das Zeitglied 10 den Koppelschalter 9 in seiner Ausgangslage zurück und schaltet damit die Spracherkennungsschaltung 7 ab und den Lautsprecher 5 des Autotelefons ein.

Das Zeitglied 10 weist einen Regeleingang 11 auf, über den eine gegenüber einer Sollstandzeit kürzere oder eine längere Standzeit des Zeitgliedes 10 eingestellt werden kann. Bei Regelung auf eine kürzere Standzeit wird die vom Impulsschalter 8 eingeleitete Sollstandzeit abgebrochen, bei Regelung auf eine längere Standzeit wird die laufende Sollstandzeit ebenfalls abgebrochen, jedoch gleichzeitig eine neue Sollstandzeit eingeleitet. Der Regeleingang 11 des Zeitgliedes ist an den Ausgang 12 der Sprachbefehlserkennungsschaltung 7 angeschlossen, an dem ein Quittiersignal abnehmbar ist.

Über das Mikrofon 6 werden im Bedarfsfall die Bedienbefehle für das Autotelefon in Sprachform gegeben. In der Spracherkennungsschaltung 7 werden die vom Mikrofon aufgenommenen Sprachsignale mit in der Spracherkennungsschaltung 7 gespeicherten Musterbefehlen verglichen. Ist in den aufgenommen Sprachsignalen ein Befehl erkannt, dann gibt die Spracherkennungsschaltung ein zugeordnetes Quittiersignal am Ausgang 12 ab.
Über einen Datenbus 13 wird die Ausführung des erkannten Befehls in den angeschlossenen Geräten bewirkt.

Je nach Art des erkannten Sprachbefehls wird durch den Quittierbefehl eine kürzere oder längere Standzeit des Zeitgliedes nach der Erkennung eingeregelt, d. h. die Standzeit entweder endgültig beendet oder eine weitere Sollstandzeit eingeleitet, um für die Auswertung eines weiteren Teilbefehls bereit zu sein.

Wird in der vorgegebenen Standzeit kein Sprachbefehl erkannt, d. h., erhält das Zeitglied 10 in einer vorgegebenen Sollstandzeit kein Quittiersignal, dann wird an dem Ende der Sollstandzeit der Koppelschalter 9 zurückgestellt und damit die Spracherkennungsschaltung 7 abgeschaltet und der Lautsprecher 5 des Autotelefons eingeschaltet.

Muß der Fahrer, z. B. bei der Wahl einer mehrstelligen Telefonnummer auf eine kritische Verkehrssituation mit gesteigerter Aufmerksamkeit reagieren, dann wird er in aller Regel den Sprachbefehl unterbrechen, so daß das Zeitglied in seiner Sollstandzeit kein weiteres Quittiersignal mehr erhält. In diesem Fall werden die bereits erkannten Teilbefehle in einem der Spracherkennungsschaltung 7 zugeordneten Speicher 14 festgehalten und eine Blinkleuchte 15 eingeschaltet. Betätigt der Fahrer nach Beruhigung der Verkehrssituation den Impulsschalter 8 erneut, dann wird der Informationsinhalt des Speichers 14 in den Programmablauf der Spracherkennungsschaltung zurückgeführt und die Blinkleuchte 15 ausgeschaltet.

Bei einem an einen der Ausgänge 2ⁿ angeschlossenen Autoradio 16 können die Teilbefehle, z. B. aus den alphanummerischen Daten der Senderangabe, beispielsweise NDR3, bestehen. Zur Ausführung der Befehle ist das Autoradio 16 an den Datenbus 13 angeschlossen. Der Lautsprecher 17 des Autoradios 16 wird dagegen mit demselben Signal stummgeschaltet wie der Lautsprecher 5 des Autotelefons.

## Patentansprüche

1. Kraftfahrzeugkommunikationszentrale (1) mit Anschlüssen (2) für ein oder mehrere im Kraftfahrzeuginnenraum akustisch wirksam werdende Geräten (3 - 5, 16 - 17), wobei die Zentrale ein im Kraftfahrzeuginnenraum angeordnetes Mikrofon (6) und eine Sprachbefehlserkennungsschaltung (7) umfaßt,
gekennzeichnet
durch einen Koppelschalter (9), mit dem die Sprachbefehlserkennungsschaltung (7) einschaltbar ist und gleichzeitig alle an die Anschlüsse (2...2ⁿ) angeschlossenen Geräte (3 -5; 16 - 17) abschaltbar sind und
durch ein die Einschaltdauer des Koppelschalters (9) steuerndes regelbares Zeitglied (10),
dessen Regeleingang (11) mit der Sprachbefehlserkennungsschaltung (7) verbunden ist, derart, daß mit der ersten Schalterbetätigung eine Sollstandzeit des Zeitgliedes eingeleitet wird und daß die Sprachbefehlserkennungsschaltung (7) je nach Art des erkannten Sprachbefehls über ein zugeordnetes Quittiersignal
- die eingeleitete Standzeit endgültig abbricht oder
- die Standzeit des Zeitgliedes (10) um eine weitere Sollstandzeit für die Eingabe eines weiteren Befehls verlängert.

2. Kraftfahrzeugkommunikationszentrale nach Anspruch 1,
dadurch gekennzeichnet,
daß bei Ausbleiben eines Quittiersignals während der Sollstandzeit an deren Ende ein Speichersignal ausgelöst wird, welches die zuvor erkannten Sprachbefehle bis zum Aufruf bei erneuter Schalterbetätigung in einem Speicher (14) der Erkennungsschaltung (7) speichert.

3. Kraftfahrzeugkommunikationszentrale nach Anspruch 2,
dadurch gekennzeichnet,
daß das Speichersignal eine optische Anzeige (15) bis zur erneuten Schalterbetätigung auslöst.

## Claims

1. Motor vehicle communications centre (1) having terminals (2) for one or more units (3-5, 16-17) which become acoustically active in the motor vehicle interior, the centre comprising a microphone (6) arranged in the motor vehicle and a voice command recognition circuit (7), characterised by a coupling switch (9) by means of which the voice command recognition circuit (7) can be switched on and all the units (3-5; 16-17) connected to the terminals (2...2ⁿ) can be switched off simultaneously, and by a controllable timer (10) which controls the on duration of the coupling switch (9) and whose control input (11) is connected to the voice command recognition circuit (7) in such a way that a desired waiting time of the timer is initiated with the first switch actuation, and that depending on the type of the voice command recognised the voice command recognition circuit (7) uses an assigned acknowledgement signal
- finally to terminate the initiated waiting time, or
- to prolong the waiting time of the timer (10) by a further desired waiting time for the input of a further command.

2. Motor vehicle communications centre, according to Claim 1, characterised in that in the absence of an acknowledgement signal during the desired waiting time a storage signal is triggered at the end of said time, which storage signal stores the previously recognised voice commands in a memory (14) of the recognition circuit (7) until retrieval upon renewed switch actuation.

3. Motor vehicle communications centre according to Claim 2, characterised in that the storage signal triggers an optical display (15) until renewed switch actuation.

## Revendications

1. Centrale de communication pour véhicule automobile (1) avec des bornes (2) pour un ou plusieurs appareils (3-5, 16-17) à effet acoustique dans l'habitacle du véhicule, la centrale comprenant un microphone (6) associé au volume intérieur du véhicule et un circuit de reconnaissance d'ordres vocaux (7), centrale caractérisée par :
- un commutateur de couplage (7) qui permet de mettre en oeuvre le circuit de reconnaissance des ordres vocaux (7) et en même temps de couper tous les appareils (3-5 ; 16-17) reliés aux bornes (2...2ⁿ) et
- une horloge (10) réglable, qui commande le temps de mise en oeuvre du commutateur de couplage (9),
son entrée de réglage (11) étant reliée au circuit de reconnaissance des ordres vocaux (7), de façon à mettre en oeuvre un temps d'attente de consigne de l'horloge lors du premier actionnement du commutateur et en ce que le circuit de reconnaissance des ordres vocaux 7, suivant le type d'ordre vocal reconnu, émet un signal d'acquittement correspondant qui
- coupe définitivement le temps d'attente en cours,
- prolonge le temps d'attente de l'horloge (10) d'un autre temps d'attente de consigne pour la réception d'un autre ordre.

2. Centrale de communication pour véhicule selon la revendication 1, caractérisée en ce que en cas d'absence de signal d'acquittement pendant le temps d'attente de consigne, à la fin on déclenche un signal de mémoire qui mémorise les ordres vocaux reconnus précédemment jusqu'à l'appel lors d'un nouvel actionnement du commutateur dans une mémoire 14 du circuit de reconnaissance (7).

3. Centrale de communication pour véhicule selon la revendication 2, caractérisée en ce que le signal de mémoire déclenche un affichage optique (15) jusqu'au nouvel actionnement du commutateur.
